# EUROPEAN PATENT SPECIFICATION

(11) **EP 3 979 154 B1**
(45) Date of publication and mention of the grant of the patent: **01.04.2026**
(21) Application number: 20200081.6
(22) Date of filing: 05.10.2020
(51) Int. Cl.: G06Q 10/04, G06Q 50/06

(54) **METHOD FOR EVALUATING AN ENERGY EFFICIENCY OF A SITE**
VERFAHREN ZUR BEWERTUNG EINER ENERGIEEFFIZIENZ EINES ORTES
PROCÉDÉ D'ÉVALUATION D'UNE EFFICACITÉ ÉNERGÉTIQUE D'UN SITE

(43) Date of publication of application: 06.04.2022
(73) Proprietor: ABB Schweiz AG, 5400 Baden (CH)
(72) Inventor: LENDERS, Felix, 64293 Darmstadt (DE); GUTERMUTH, Georg, 69115 Heidelberg (DE); PRIMAS, Bernhard, 68165 Mannheim (DE)
(74) Representative: Maiwald GmbH

(56) References cited:
- EP-A1- 3 576 029

## Description

### Field of the Invention

The invention relates to the field of evaluating an energy efficiency, particularly for industrial or commercial sites. The invention further relates to a system, and to a use.

### Background

In many cases, industrial or commercial sites uses enormous amount of energy to run their processes, buildings, and/or further consumers in their sites. Analysing a site to find energy optimization potential of the site and/or their equipment operation typically requires a deep understanding of the site and may become a time-consuming manual process. On the one hand, data from different data sources, stored in different databases, need to be combined for an analysis of the site's energy consumption. On the other hand, energy optimization of the site requires, at least in some cases, a physical model suitable for an optimization of at least a part of the site. Due to the high complexity and the interdisciplinary nature, obtaining an accurate physical model may be an inherently difficult task.

Document EP 3 576 029 A1 relates to the field of evaluating an energy efficiency, particularly for industrial or commercial sites.

### Description

It is therefore an objective of the invention to provide an improved method for evaluating an energy efficiency of an energy consumption scenario. This objective is achieved by the subject-matter of the independent claims. Further embodiments are evident from the dependent patent claims and the following description.

One aspect relates to a method for evaluating an energy efficiency of a second energy consumption scenario. The method comprises the steps of:
Obtaining a first energy consumption scenario, which comprises a first time-series of energy consumption data of at least one device, and a quality measure of the first energy consumption scenario;
obtaining the second energy consumption scenario, which comprises a second time-series of energy consumption data, wherein the second energy consumption scenario has a same or a shorter duration than the first energy consumption scenario;
comparing the second time-series of energy consumption data to the first time-series of energy consumption data; and
if the second time-series of energy consumption data is similar to the first time-series of energy consumption data, outputting the quality measure of the first energy consumption scenario.

A site may be an industrial or commercial site, which may run processes, buildings, and/or further consumers in the site. The site may comprise one or more energy consumption scenarios. Each of the energy consumption scenarios may comprise a plurality of data, particularly a time-series of energy data of at least one device.

The device may be a machine for any purpose that is run on the site, e.g. a motor, a heater, a cooler, a computing machine, and/or any energy-consuming device. The device may have one or more - or none - built-in energy-sensors, a plurality of devices may be collected and their energy consumption may be measured and/or obtained in a collective way. In other words, some devices may provide detailed information - possibly even of their parts and/or components -, other "dumb" devices may only be measured at a common source. The plurality of devices may be organized as disjunctive or overlapping subsets, they may be organized, e.g., as a tree and/or in another topology. The energy consumption scenarios may be obtained by an energy management system (EMS). Some sites may have installed an EMS at least for a part of their devices, thus having "historic" and/or current energy consumption time-series readily available, e.g. as measurement data of electrical (or other) load, possibly either aggregated or distributed into individual load-profile for sub-units. Measurement data may comprise energy data of equipment such as battery, photovoltaic, heating, ventilation, air-conditioning, and/or may others. An EMS may have set-points.

Each first energy consumption scenario may comprise a quality measure of this first energy consumption scenario. The quality measure may be provided in an automated and/or a manual way. The quality measure may comprise any value suited for evaluation, e.g. {A; B; ... }, { 1; 2; ... }, { "good"; "average"; "bad"; ... }, and/or further values. The quality measure may comprise an energy consumption, for instance based on a sum of energy consumptions of the devices involved in a scenario for the duration of the scenario. The quality measure may comprise one or more attributes, e.g., an energy-steering sequence (e.g. in an "app"), a comment and/or other informal and/or natural-language part. The first energy consumption scenario may use a set of labelled example time-series or patterns. The same first energy consumption scenarios may represent a class of operation modes, where identical classes specify examples that show the same kind of efficiency or inefficiency. The first energy consumption scenarios may be limited to the worst ("inefficient") or the best ("best practice") operation modes.

While the first energy consumption scenario may be considered as "examples", the second energy consumption scenario may be considered as "real-life probes". The second time-series may be shorter than the first time-series or may, at max, have the same time duration as the first time-series. The second time-series may have been recorded for a longer time duration, but in this case it may be fragmented into a time-series that is shorter as the first time-series it is to compare with. The first and second time-series may have essentially the same temporal resolution, or may be adapted to the same temporal resolution.

The comparing may relate to a time-series of only one device, e.g. comparing a day-and-night scenario of the second time-series with one of the first time-series, or comparing a frequent on-off-switching, which may have been classified as inefficient. The comparing may relate to a time-series of several devices, e.g. to a heater and a cooler. Running these devices together, e.g. in the same room, may have been classified as inefficient. The comparing may comprise a time-series of input-devices and/or sensors, e.g. reflecting environment data such as temperature, angle of the sun, wind, etc.

When the comparing comes to the result that the second time-series of energy consumption data is similar to (at least one of) the first time-series of energy consumption data, the quality measure of the first energy consumption scenario may be output, possibly including one or more attributes.

This may advantageously lead to a significantly improved method for evaluating an energy efficiency of an energy consumption scenario. Moreover, both a quantitative and a qualitative basis may be provided for fast improvements on the energy efficiency of the site or parts of it. This may even serve as a basis for an "intelligent" steering of the site's power consumption. At least in some cases, large datasets that are recorded "standardly" by several EMS, may be used systematically to exploit flexibilities to realize improvements in operation of equipment.

In various embodiments, the data being similar means a deviation of each data of the first time-series of energy consumption data to the data of the second time-series of energy consumption data of less than 1 %, of less than 5 %, of less than 10 %, of less than 20 %, or of less than 40%. This may be applied to one data, a set of data - e.g. to a "sliding window" of several values - and/or to a correlation of data. This may advantageously serve as a basis for targeted comparing of the data, thus improving the trust in the method's correctness.

In various embodiments, the data being similar means that a trained artificial neural net, ANN, as described below outputs the data of the second time-series of energy consumption data being part of the data of the first time-series of energy consumption data. The ANN, or a part of it, may be called "Pattern Detector". The "Pattern Detector" is piece of software and/or hardware that is configured to be trained for detecting occurrences of a pattern. The pattern may come from a collection of first energy consumption scenarios, which may be stored in an "Operation Database". Within a time-series, where by occurrence a sub-series of the input time series is meant such that this sub-series is classified into the same quality measure - e.g. class - as the other examples by a suitable classifier, e.g. a recurrent neural network.

In various embodiments, the quality measure comprises an energy consumption class, a quality estimation and/or a measurement result of the energy consumed in this scenario. Accordingly, each first energy consumption scenario comprises a quality measure of this first energy consumption scenario. The quality measure may be provided in an automated and/or a manual way. The quality measure may comprise any value suited for evaluation, e.g. { 1; 2; ... }, { "good"; "average"; "bad"; ... }, and/or further values. The quality measure may comprise an energy consumption, for instance based on a sum of energy consumptions of the devices involved in a scenario for the duration of the scenario.

In some embodiments, second energy consumption scenarios of essentially the same quality measure are aggregated. Depending on the definition of the "same" quality measure (or class), this may comprise some deviations, e.g. a deviation of 10 %, 20 %, or others. This aggregation advantageously may help to provide the user with an intuitive understanding how far from an optimum - or, how close it - the behaviour of the considered subsystem is.

In various embodiments, the quality measure is attributed. The quality measure may be attributed, for instance, with a comment, a recommendation, a hint, a statement, or the like. The uses may this way get an insight why the examples of this class showcase inefficiency and what can be done to improve operation. This may advantageously be a basis to propose an improvement in cases when, e.g., the energy consumption sum of the at least one device of the first energy consumption scenario is better than of the second energy consumption scenario. On this basis, for example device settings may be changed.

In various embodiments, the at least one device comprises a machine driven by electrical, mechanical, chemical, and/or further energy sources. Examples may be a heater, a cooler, a motor, a computing machine, a loader, a compressor, a pressure-driven device, a device driven by heat energy and/or chemical means such as gas and/or another combustible material, and/or solar energy as an energy source. This may contribute to get an overall survey of the "real" energy consumption of a site.

Furthermore, this may help to achieve a substantial improvement of the energy consumption.

In some embodiments, the first energy consumption scenario and the second energy consumption scenario comprise energy consumption data of at least two devices. The two devices may be selected manually or automatically, e.g. by an ANN or by a correlation-computing device. This may help to discover apparent and/or hidden correlations, for instance between a heater and a cooler, which may lead to a worsened energy consumption when, e.g., run in parallel in the same room.

In various embodiments, the first energy consumption scenario and the second energy consumption scenario comprise input-data. This may contribute to compare the reaction of several sub-systems. This may, for instance, be a basis to detect that on a rapid temperature-change - or other changes -, some sub-systems may react more energy-efficient than others.

In some embodiments, the input-data comprise environment data, schedule data, production cycle data, and/or other data to influence at least one device of a scenario. Examples may comprise, e.g., weather data, like temperature, sun, rain, humidity, and/or further environment data (e.g. dust). This may include production schedules. Some of them with dedicated length, which may influence the length of an energy consumption scenario. This may include schedules at all, e.g. day/night. Further, it may include data from a Manufacturing Execution System, production cycle data - like: inputting material #1, etc. - and/or many others. This may increase the comparability of scenarios.

In some embodiments, the method comprises a further step: If the second time-series of input-data is similar to more than one first time-series of input-data, namely to a primary and a secondary time-series of input-data of a primary and a secondary energy consumption scenario, outputting the quality measure of the primary and the secondary energy consumption scenario. This may lead to an automatic or semi-automatic improvement of the energy consumption, because it makes apparent if there is a more efficient method for the use of energy. For attributed quality measures, this increase the acceptance, because reasons for the improvements may be provided this way.

An aspect relates to a system for evaluating an energy efficiency of an energy consumption scenario, which is configured to execute a method as described above and/or below.

An aspect relates to an artificial neural net, ANN, which is configured to:
in a first learning phase, obtaining a plurality of first energy consumption scenarios, which each comprise a first time-series of energy consumption data of at least one device, and a quality measure of the first energy consumption scenario;
in a second learning phase, obtaining a plurality of second energy consumption scenarios, which each comprise a second time-series of energy consumption data of at least one device, and a similarity assessment of each second energy consumption scenario to each first energy consumption scenario;
in a third learning phase, analyzing the similarity assessments, by the ANN;
in a productive phase, applying, by the ANN, the similarity assessments to a newly obtained second energy consumption scenario; and
if a similarity assessment of the newly obtained second energy consumption scenario is greater than a predefined value - i.e. on a successful match -, outputting the quality measure for the energy efficiency of the scenario.

An aspect relates to a use of a system as described above and/or below for evaluating an energy efficiency of an energy consumption scenario and/or of a site running a plurality of energy consumption scenarios.

For further clarification, the invention is described by means of embodiments shown in the figures. These embodiments are to be considered as examples only, but not as limiting.

### Brief Description of the Drawings

The drawings depict:
**Fig. 1a and 1b** schematically an obtaining of a first and a second energy consumption scenario according to an embodiment;
**Fig. 2** schematically a workflow according to an embodiment;
**Fig. 3** a flow diagram according to an embodiment.

### Detailed Description of Embodiments

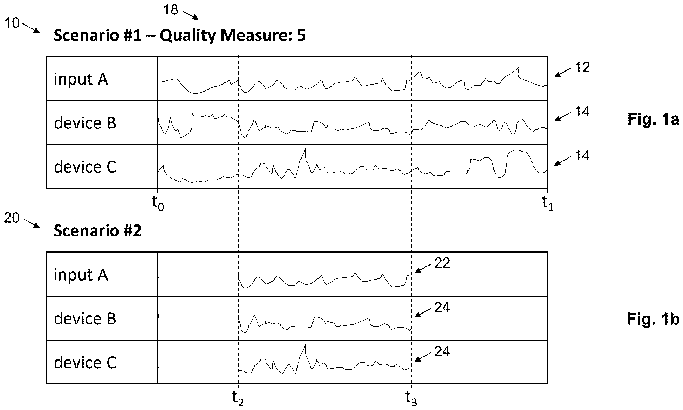

**Fig. 1a** schematically shows an obtaining of a first energy consumption scenario 10 and **Fig. 1b** an obtaining of a second energy consumption scenario 20 according to an embodiment. In the example shown, the first energy consumption scenario 10 comprises a first time-series of energy consumption data 14 of device B and device C and input-data 12 of an input A. The data - although shown in an "analogue" way - comprise time-series of digital data, whose values have been obtained from a time t₀ to a time t₁. In addition, the first energy consumption scenario 10 comprises a quality measure 18, namely "5". The quality measure 18 may have been obtained automatically and/or manually, e.g. by an energy assessment.

The second energy consumption scenario 20 of **Fig. 1b** has been obtained from a time t₂ to a time t₃, after the obtaining of the first energy consumption scenario 10. The second energy consumption scenario 20 comprises a second time-series of energy consumption data 24 of device B and device C and input-data 22 of an input A. As can be seen from these figures, the second energy consumption scenario 20 has a shorter duration than the first energy consumption scenario 10. After obtaining the second energy consumption scenario 20, this is compared to the first energy consumption scenario 10, i.e. to the first time-series of energy consumption data 14 of device B and device C and input-data 12 of an input A. In the case shown, the second time-series of energy consumption data 24 is similar to the first time-series of energy consumption data 14, Thus, the quality measure 18, i.e. "5", of the first energy consumption scenario 10 is output. The comparison of energy consumption scenario 20 may be done with a plurality of first energy consumption scenarios 10. This may, e.g., be used for studying different "reactions" of devices of the site, possibly depending on a variety of factors. In cases when the quality measure 18 is attributed with a comment or a hint, this may be used for systematic improvements of the energy consumption of the site.

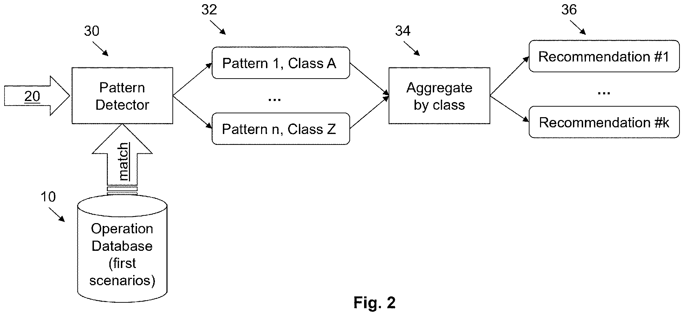

**Fig. 2** schematically shows a workflow according to an embodiment. In an Operation Database, a plurality of first energy consumption scenarios 10 (see **Fig. 1****)** is stored. After obtaining a second energy consumption scenario 20, this is compared by a Pattern Detector 30 to the first energy consumption scenario 10. After a successful match of the second energy consumption scenario 20 to a first energy consumption scenarios 10 of the Operation Database, the Pattern 32 or scenario matched is output, along with a quality measure, i.e. in the case shown with a class. The matched Patterns 32 with the same class may be aggregated 34, and, based on this, Recommendations 36 for improving the energy consumption may be output.

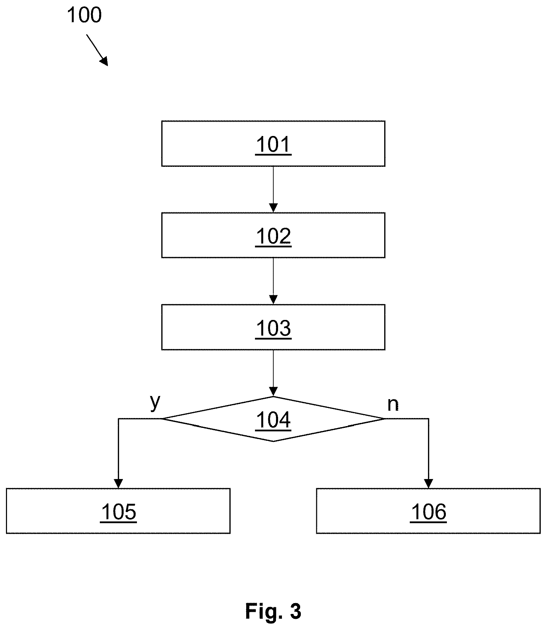

**Fig. 3** depicts a flow diagram 100 according to an embodiment. In a step 101, a first energy consumption scenario 10 (see **Fig. 1****)** is obtained, which comprises a first time-series of energy consumption data 14 of at least one device, and a quality measure 18 of the first energy consumption scenario 10. In a step 102, a second energy consumption scenario 20 is obtained, which comprises a second time-series of energy consumption data 24. The second energy consumption scenario 20 may have the same or a shorter duration than the first energy consumption scenario 10. In a step 103, the second time-series of energy consumption data 24 to the first time-series of energy consumption data 14 are compared (see **Fig. 2****).** In cases when the second time-series of energy consumption data 24 is found similar to the first time-series of energy consumption data 14, the quality measure 18 of the first energy consumption scenario 10 is output.

### List of Reference Symbols

- 10: first energy consumption scenario
- 12: input-data
- 14: consumption data
- 18: quality measure
- 20: second energy consumption scenario
- 22: input-data
- 24: consumption data
- 30: Pattern Detector
- 32: matched Patterns
- 34: aggregated classes
- 36: Recommendations
- 100: flow diagram
- 101 - 106: steps

## Claims

1. A method for evaluating an energy efficiency of a second energy consumption scenario (20) in an industrial or commercial site that runs processes, buildings, and/or further consumers, the method comprising the steps of:
obtaining a first energy consumption scenario (10), which comprises a first time-series of energy consumption data (14) of at least one device, and a quality measure (18) of the first energy consumption scenario (10), wherein the quality measure (18) is based on a sum of energy consumptions of the at least one device;
obtaining the second energy consumption scenario (20), which comprises a second time-series of energy consumption data (24),
wherein the second energy consumption scenario (20) has a shorter duration than the first energy consumption scenario (10);
comparing, by a pattern detector (30), the second time-series of energy consumption data (24) to the first time-series of energy consumption data (14); and
if the second time-series of energy consumption data (24) is similar to the first time-series of energy consumption data (14), outputting the quality measure (18) of the first energy consumption scenario (10), wherein the quality measure (18) is used for evaluating and improving the energy consumption efficiency of the at least one device and/or controlling the at least one device.

2. The method of claim 1,
wherein the data being similar means a deviation of each data of the first time-series of energy consumption data (14) to the data of the second time-series of energy consumption data (24) of less than 1 %, of less than 5 %, of less than 10 %, of less than 20 %, or of less than 40%.

3. The method of claim 1,
wherein the data being similar means that a trained artificial neural net, ANN, according to claim 13 outputs the data of the second time-series of energy consumption data (24) being part of the data of the first time-series of energy consumption data (14).

4. The method of any one of the preceding claims,
wherein the quality measure (18) comprises an energy consumption class, a quality estimation and/or a measurement result of the energy consumed in this scenario.

5. The method of claim 4,
wherein second energy consumption scenarios (20) of essentially the same quality measure (18) are aggregated.

6. The method of any one of the preceding claims,
wherein the quality measure (18) is attributed.

7. The method of any one of the preceding claims,
wherein the at least one device comprises a machine driven by electrical, mechanical, chemical, and/or further energy sources.

8. The method of any one of the preceding claims,
wherein the first energy consumption scenario (10) and the second energy consumption scenario (20) comprise energy consumption data (14, 24) of at least two devices.

9. The method of any one of the preceding claims,
wherein the first energy consumption scenario (10) and the second energy consumption scenario (20) comprise input-data (12, 22).

10. The method of claim 9,
wherein the input-data (12, 22) comprise environment data, schedule data, production cycle data, and/or other data to influence at least one device of a scenario.

11. The method of any one of the preceding claims,
wherein, if the second time-series of input-data (22) is similar to more than one first time-series of input-data (12), namely to a primary and a secondary time-series of input-data of a primary and a secondary energy consumption scenario,
outputting the quality measure (18) of the primary and the secondary energy consumption scenario.

12. A system for evaluating an energy efficiency of an energy consumption scenario (10, 20), which is configured to execute a method according to any one of the preceding claims.

13. An artificial neural net, ANN, which is configured to:
in a first learning phase, obtaining a plurality of first energy consumption scenarios (10), which each comprise a first time-series of energy consumption data (14) of at least one device, and a quality measure (18) of the first energy consumption scenario (10);
in a second learning phase, obtaining a plurality of second energy consumption scenarios (20), which each comprise a second time-series of energy consumption data (24) of at least one device, and a similarity assessment of each second energy consumption scenario (20) to each first energy consumption scenario (10);
in a third learning phase, analyzing the similarity assessments, by the ANN;
in a productive phase, applying, by the ANN, the similarity assessments to a newly obtained second energy consumption scenario (20); and
if a similarity assessment of the newly obtained second energy consumption scenario (20) is greater than a predefined value, outputting the quality measure (18) for the energy efficiency of the scenario.

14. A non-transitory computer-readable storage medium having a program stored therein, which, when executed on a processor instructs the processor to perform a method according to any one of the claims 1 - 11.

15. Use of a system according to claim 12 for evaluating an energy efficiency of an energy consumption scenario and/or of a site running a plurality of energy consumption scenarios.

## Patentansprüche

1. Verfahren zum Bewerten einer Energieeffizienz eines zweiten Energieverbrauchsszenarios (20) in einem Industrie- oder Gewerbestandort, der Prozesse, Gebäude und/oder weitere Verbraucher betreibt, wobei das Verfahren die folgenden Schritte aufweist:
erhalten eines ersten Energieverbrauchsszenarios (10), das eine erste Zeitreihe von Energieverbrauchsdaten (14) mindestens einer Vorrichtung und ein Qualitätsmaß (18) des ersten Energieverbrauchsszenarios (10) umfasst, wobei das Qualitätsmaß (18) auf einer Summe der Energieverbräuche der mindestens einen Vorrichtung basiert;
erhalten des zweiten Energieverbrauchsszenarios (20), das eine zweite Zeitreihe von Energieverbrauchsdaten (24) umfasst,
wobei das zweite Energieverbrauchsszenario (20) eine kürzere Dauer als das erste Energieverbrauchsszenario (10) hat;
vergleichen, mittels eines Musterdetektors (30), der zweiten Zeitreihe von Energieverbrauchsdaten (24) mit der ersten Zeitreihe von Energieverbrauchsdaten (14); und
wenn die zweite Zeitreihe von Energieverbrauchsdaten (24) der ersten Zeitreihe von Energieverbrauchsdaten (14) ähnlich ist, Ausgeben des Qualitätsmaßes (18) des ersten Energieverbrauchsszenarios (10), wobei das Qualitätsmaß (18) zum Bewerten und Verbessern der Energieverbrauchseffizienz der mindestens einen Vorrichtung und/oder zum Steuern der mindestens einen Vorrichtung verwendet wird.

2. Verfahren nach Anspruch 1,
wobei die Ähnlichkeit der Daten eine Abweichung jedes Datums der ersten Zeitreihe von Energieverbrauchsdaten (14) von den Daten der zweiten Zeitreihe von Energieverbrauchsdaten (24) von weniger als 1 %, weniger als 5 %, weniger als 10 %, weniger als 20 % oder weniger als 40 % bedeutet.

3. Verfahren nach Anspruch 1,
wobei die Ähnlichkeit der Daten bedeutet, dass ein trainiertes künstliches neuronales Netz, ANN, gemäß Anspruch 13 die Daten der zweiten Zeitreihe von Energieverbrauchsdaten (24) ausgibt, die Teil der Daten der ersten Zeitreihe von Energieverbrauchsdaten (14) sind.

4. Verfahren nach einem der vorstehenden Ansprüche,
wobei das Qualitätsmaß (18) eine Energieverbrauchsklasse, eine Qualitätsschätzung und/oder ein Messergebnis der in diesem Szenario verbrauchten Energies umfasst.

5. Verfahren nach Anspruch 4,
wobei zweite Energieverbrauchsszenarien (20) mit im Wesentlichen dem gleichen Qualitätsmaß (18) aggregiert werden.

6. Verfahren nach einem der vorstehenden Ansprüche,
wobei das Qualitätsmaß (18) attributiert ist.

7. Verfahren nach einem der vorstehenden Ansprüche,
wobei die mindestens eine Vorrichtung eine Maschine umfasst, die durch elektrische, mechanische, chemische und/oder weitere Energiequellen angetrieben wird.

8. Verfahren nach einem der vorstehenden Ansprüche,
wobei das erste Energieverbrauchsszenario (10) und das zweite Energieverbrauchsszenario (20) Energieverbrauchsdaten (14, 24) von mindestens zwei Vorrichtungen umfassen.

9. Verfahren nach einem der vorstehenden Ansprüche,
wobei das erste Energieverbrauchsszenario (10) und das zweite Energieverbrauchsszenario (20) Eingabedaten (12, 22) umfassen.

10. Verfahren nach Anspruch 9,
wobei die Eingabedaten (12, 22) Umgebungsdaten, Zeitplandaten, Produktionszyklusdaten und/oder andere Daten umfassen, die mindestens eine Vorrichtung eines Szenarios beeinflussen.

11. Verfahren nach einem der vorstehenden Ansprüche,
wobei, wenn die zweite Zeitreihe von Eingabedaten (22) mehr als einer ersten Zeitreihe von Eingabedaten (12) ähnelt, nämlich einer primären und einer sekundären Zeitreihe von Eingabedaten eines primären und eines sekundären Energieverbrauchsszenarios,
Ausgabe des Qualitätsmaßes (18) des primären und des sekundären Energieverbrauchsszenarios.

12. System zur Bewertung einer Energieeffizienz eines Energieverbrauchsszenarios (10, 20), das dazu eingerichtet ist, ein Verfahren gemäß einem der vorstehenden Ansprüche auszuführen.

13. Ein künstliches neuronales Netz, ANN, das dazu eingerichtet ist:
in einer ersten Lernphase eine Vielzahl von ersten Energieverbrauchsszenarien (10) zu erhalten, die jeweils eine erste Zeitreihe von Energieverbrauchsdaten (14) mindestens einer Vorrichtung und ein Qualitätsmaß (18) des ersten Energieverbrauchsszenarios (10) umfassen;
in einer zweiten Lernphase eine Vielzahl von zweiten Energieverbrauchsszenarien (20) zu erhalten, die jeweils eine zweite Zeitreihe von Energieverbrauchsdaten (24) mindestens einer Vorrichtung und eine Ähnlichkeitsbewertung jedes zweiten Energieverbrauchsszenarios (20) zu jedem ersten Energieverbrauchsszenario (10) umfassen;
in einer dritten Lernphase die Ähnlichkeitsbewertungen durch das ANN analysieren;
in einer Produktivphase, anwenden, durch das ANN, der Ähnlichkeitsbewertungen auf ein neu erhaltenes zweites Energieverbrauchsszenario (20); und
wenn eine Ähnlichkeitsbewertung des neu erhaltenen zweiten Energieverbrauchsszenarios (20) größer als ein vordefinierter Wert ist, ausgeben des Qualitätsmaßes (18) für die Energieeffizienz des Szenarios.

14. Nicht-transitorisches, computerlesbares Speichermedium mit einem darauf gespeicherten Programm, das, wenn es auf einem Prozessor ausgeführt wird, den Prozessor anweist, ein Verfahren gemäß einem der Ansprüche 1 bis 11 durchzuführen.

15. Verwendung eines Systems gemäß Anspruch 12 zur Bewertung der Energieeffizienz eines Energieverbrauchsszenarios und/oder eines Standorts, an dem mehrere Energieverbrauchsszenarien ausgeführt werden.

## Revendications

1. Procédé d'évaluation d'une efficacité énergétique d'un second scénario de consommation d'énergie (20) dans un site industriel ou commercial qui emploie des processus, des bâtiments, et/ou des consommateurs supplémentaires, le procédé comprenant les étapes suivantes :
l'obtention d'un premier scénario de consommation d'énergie (10), qui comprend une première série chronologique de données de consommation d'énergie (14) d'au moins un dispositif, et une mesure de qualité (18) du premier scénario de consommation d'énergie (10), dans lequel la mesure de qualité (18) est basée sur une somme de consommations d'énergie de l'au moins un dispositif ;
l'obtention du second scénario de consommation d'énergie (20), qui comprend une seconde série chronologique de données de consommation d'énergie (24), dans lequel le second scénario de consommation d'énergie (20) a une durée plus courte que le premier scénario de consommation d'énergie (10) ;
la comparaison, par un détecteur de modèle (30), de la seconde série chronologique de données de consommation d'énergie (24) à la première série chronologique de données de consommation d'énergie (14) ; et
si la seconde série chronologique de données de consommation d'énergie (24) est similaire à la première série chronologique de données de consommation d'énergie (14), la sortie de la mesure de qualité (18) du premier scénario de consommation d'énergie (10), dans lequel la mesure de qualité (18) est utilisée pour évaluer et améliorer l'efficacité de consommation d'énergie de l'au moins un dispositif et/ou commander l'au moins un dispositif.

2. Procédé de la revendication 1,
dans lequel le fait que les données sont similaires signifie un écart de chaque élément de données de la première série chronologique de données de consommation d'énergie (14) par rapport aux données de la seconde série chronologique de données de consommation d'énergie (24) de moins de 1 %, de moins de 5 %, de moins de 10 %, de moins de 20 %, ou de moins de 40 %.

3. Procédé de la revendication 1,
dans lequel le fait que les données sont similaires signifie qu'un réseau neuronal artificiel, Artificial Neural Net ANN, entraîné, selon la revendication 13, sort les données de la seconde série chronologique de données de consommation d'énergie (24) faisant partie des données de la première série chronologique de données de consommation d'énergie (14).

4. Procédé de l'une quelconque des revendications précédentes,
dans lequel la mesure de qualité (18) comprend une classe de consommation d'énergie, une estimation de qualité, et/ou un résultat de mesure de l'énergie consommée dans ce scénario.

5. Procédé de la revendication 4,
dans lequel des seconds scénarios de consommation d'énergie (20) d'essentiellement la même mesure de qualité (18) sont agrégés.

6. Procédé de l'une quelconque des revendications précédentes,
dans lequel la mesure de qualité (18) est attribuée.

7. Procédé de l'une quelconque des revendications précédentes,
dans lequel l'au moins un dispositif comprend une machine entraînée par des sources d'énergie électrique, mécanique, chimique, et/ou supplémentaires.

8. Procédé de l'une quelconque des revendications précédentes,
dans lequel le premier scénario de consommation d'énergie (10) et le second scénario de consommation d'énergie (20) comprennent des données de consommation d'énergie (14, 24) d'au moins deux dispositifs.

9. Procédé de l'une quelconque des revendications précédentes,
dans lequel le premier scénario de consommation d'énergie (10) et le second scénario de consommation d'énergie (20) comprennent des données d'entrée (12, 22).

10. Procédé de la revendication 9,
dans lequel les données d'entrée (12, 22) comprennent des données d'environnement, des données de planification, des données de cycle de production, et/ou d'autres données pour influencer au moins un dispositif d'un scénario.

11. Procédé de l'une quelconque des revendications précédentes,
dans lequel, si la seconde série chronologique de données d'entrée (22) est similaire à plus d'une première série chronologique de données d'entrée (12), à savoir à une série chronologique de données d'entrée primaire et à une série chronologique de données d'entrée secondaire d'un scénario de consommation d'énergie primaire et d'un scénario de consommation d'énergie secondaire,
la sortie de la mesure de qualité (18) du scénario de consommation d'énergie primaire et du scénario de consommation d'énergie secondaire.

12. Système pour évaluer une efficacité énergétique d'un scénario de consommation d'énergie (10, 20), qui est configuré pour exécuter un procédé selon l'une quelconque des revendications précédentes.

13. Réseau neuronal artificiel, Artificial Neural Net ANN, qui est configuré pour :
dans une premier phase d'apprentissage, obtenir une pluralité de premiers scénarios de consommation d'énergie (10), qui comprennent chacun une première série chronologique de données de consommation d'énergie (14) d'au moins un dispositif, et une mesure de qualité (18) du premier scénario de consommation d'énergie (10) ;
dans une deuxième phase d'apprentissage, obtenir une pluralité de seconds scénarios de consommation d'énergie (20), qui comprennent chacun une seconde série chronologique de données de consommation d'énergie (24) d'au moins un dispositif, et une estimation de similarité de chaque second scénario de consommation d'énergie (20) par rapport à chaque premier scénario de consommation d'énergie (10) ;
dans une troisième phase d'apprentissage, analyser les estimations de similarité, par l'ANN ;
dans une phase productive, appliquer, par l'ANN, les estimations de similarité à un second scénario de consommation d'énergie (20) nouvellement obtenu ; et
si une estimation de similarité du second scénario de consommation d'énergie (20) nouvellement obtenu est supérieure à une valeur prédéfinie, sortir la mesure de qualité (18) pour l'efficacité énergétique du scénario.

14. Support de stockage non transitoire lisible par ordinateur ayant un programme stocké dans celui-ci, qui, lorsqu'il est exécuté sur un processeur donne l'instruction au processeur de réaliser un procédé selon l'une quelconque des revendications 1 à 11.

15. Utilisation d'un système selon la revendication 12 pour évaluer une efficacité énergétique d'un scénario de consommation d'énergie et/ou d'un site employant une pluralité de scénarios de consommation d'énergie.
